# EUROPEAN PATENT APPLICATION

(11) **EP 4 651 618 A1**
(43) Date of publication of application: **19.11.2025**
(21) Application number: 23915395.0
(22) Date of filing: 13.01.2023
(51) Int. Cl.: H04W 76/11

(54) **METHOD, APPARATUS, AND DEVICE FOR DETERMINING TERMINAL IDENTIFIER, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Hersina, Günter
(86) International application number: PCT/CN2023/072200
(87) International publication number: WO 2024/148626

(57) **Abstract**

The present disclosure provides a method, apparatus, and device for determining a terminal identifier, and a storage medium, and belongs to the technical field of communication. The method comprises: determining a first terminal identifier corresponding to a first terminal device and/or a second terminal identifier corresponding to a second terminal device; and the second terminal device being: a terminal device needing to establish an end-to-end connection to the first terminal device by means of a relay terminal device. The method of the present disclosure provides a method for determining a terminal identifier, which method can be used for determining a terminal identifier by means of end-to-end-connected terminal devices, allowing a relay terminal device to subsequently accurately transmit a message on the basis of the terminal identifier, thereby ensuring communication stability between end-to-end connected terminal devices.

## Description

### TECHNICAL FIELD

The present disclosure relates to the field of communication technologies, and in particular to a method/apparatus/device for determining a terminal identity and a storage medium.

### BACKGROUND

In a communication system, direct communication between terminals is achieved by introducing a sidelink (SL). Different terminals may realize an end-to-end, specifically UE to UE (U2U), connection through a relay terminal. Optionally, the terminals that realize the end-to-end connection through the relay terminal may be called remote terminals, and the relay terminal may realize message forwarding between different remote terminals, thereby realizing end-to-end (i.e., U2U) transmission.

In the end-to-end transmission procedure, it is usually required to assign a terminal identity to a remote terminal, and make the message sent by the remote terminal carry the terminal identity of the remote terminal, so that the relay terminal may identify which remote terminal receives the message and/or which remote terminal sends the message based on the terminal identity carried in the message, so as to accurately forward the message to a corresponding remote terminal. Therefore, a method for allocating the terminal identity to the remote terminal is urgently needed.

### SUMMARY

The present disclosure proposes a method, an apparatus, and a device for determining a terminal identity, and a storage medium, which are used to determine a terminal identity for a terminal.

In a first aspect, embodiments of the present disclosure provide a method for determining a terminal identity. The method includes:
determining a first terminal identity corresponding to a first terminal and/or a second terminal identity corresponding to a second terminal, the second terminal being a terminal that needs to establish an end-to-end connection with the first terminal through a relay terminal.

In the method of the present disclosure, the first terminal identity corresponding to the first terminal and/or the second terminal identity corresponding to the second terminal can be determined. It can be seen that the present disclosure provides the method for determining a terminal identity, which can be used to determine the terminal identity for the terminal connected through the end-to-end connection, so that subsequently, the relay terminal can realize accurate message forwarding based on the terminal identity, thereby ensuring the communication stability between the terminals in the end-to-end connection.

In a second aspect, the embodiments of the present disclosure provide a method for determining a terminal identity. The method includes:
determining a first terminal identity corresponding to a first terminal and/or a second terminal identity corresponding to a second terminal, the first terminal and the second terminal establishing an end-to-end connection through a relay terminal.

In a third aspect, the embodiments of the present disclosure provide a method for determining a terminal identity, including:
receiving a first terminal identity corresponding to a first terminal and/or a second terminal identity corresponding to a second terminal sent by a relay terminal, the first terminal being a terminal that needs to establish an end-to-end connection with the second terminal through the relay terminal.

In a fourth aspect, the embodiments of the present disclosure provide a communication apparatus. The apparatus includes:
a processing module, configured to determine a first terminal identity corresponding to a first terminal and/or a second terminal identity corresponding to a second terminal, the second terminal being a terminal that needs to establish an end-to-end connection with the first terminal through a relay terminal.

In a fifth aspect, the embodiments of the present disclosure provide a communication apparatus. The apparatus includes:
a processing module, configured to determine a first terminal identity corresponding to a first terminal and/or a second terminal identity corresponding to a second terminal, the first terminal and the second terminal establishing an end-to-end connection through a relay terminal.

In a sixth aspect, the embodiments of the present disclosure provide a communication apparatus. The apparatus includes:
a transceiver module, configured to receive a first terminal identity corresponding to a first terminal and/or a second terminal identity corresponding to a second terminal sent by a relay terminal, the first terminal being a terminal that needs to establish an end-to-end connection with the second terminal through a relay terminal.

In a seventh aspect, the embodiments of the present disclosure provide a communication apparatus. The apparatus includes a processor. When the processor calls a computer program in a memory, the method described in any one of the first to third aspects is executed.

In an eighth aspect, the embodiments of the present disclosure provide a communication apparatus. The apparatus includes a processor, and a memory storing a computer program. The processor executes the computer program stored in the memory, so that the communication apparatus performs the method described in any one of the first to third aspects above.

In a ninth aspect, the embodiments of the present disclosure provide a communication apparatus. The apparatus includes a processor and an interface circuit. The interface circuit is configured to receive code instructions and transmit them to the processor. The processor is configured to run the code instructions to enable the apparatus to perform the method described in any one of the first to third aspects above.

In a tenth aspect, the embodiments of the present disclosure provide a communication system. The system includes the communication apparatuses described in the fourth aspect to the sixth aspect, or the system includes the communication apparatuses described in the seventh aspect, or the system includes the communication apparatus described in the eighth aspect, or the system includes the communication apparatus described in the ninth aspect.

In an eleventh aspect, the embodiments of the present invention provide a computer-readable storage medium for storing instructions used for the above-mentioned network device, and when the instructions are executed, the terminal performs the method described in any one of the above-mentioned first to third aspects.

In a twelfth aspect, the present disclosure further provides a computer program product including a computer program. When the computer program is executed on a computer, the computer is caused to perform the method described in any one of the first to third aspects above.

In a thirteenth aspect, the present disclosure provides a chip system. The system includes at least one processor and an interface, and is configured to support a network device to implement the functions involved in the method described in any one of the first to third aspects, for example, determining or processing at least one of the data and information involved in the above methods. In a possible design, the chip system also includes a memory, which is configured to store a computer program and data necessary for a source auxiliary node. The chip system may be composed of chips, or may include a chip and other discrete components.

In a fourteenth aspect, the present disclosure provides a computer program. When the computer program is executed on a computer, the computer is caused to execute the method described in any one of the first to third aspects above.

### BRIEF DESCRIPTION OF THE DRAWINGS

The above and/or additional aspects and advantages of the present disclosure will become apparent and easily understood from the following description of the embodiments in conjunction with the accompanying drawings.
FIG. 1 is a schematic diagram of an architecture of a communication system provided by an embodiment of the present disclosure.
FIG. 2 is a schematic diagram of a flow chart of a method for determining a terminal identity provided by another embodiment of the present disclosure.
FIG. 3 is a schematic diagram of a flow chart of a method for determining a terminal identity provided by yet another embodiment of the present disclosure.
FIG. 4 is a schematic diagram of a flow chart of a method for determining a terminal identity provided by yet another embodiment of the present disclosure.
FIG. 5 is a schematic diagram of a flow chart of a method for determining a terminal identity provided by another embodiment of the present disclosure.
FIG. 6 is a schematic diagram of a flow chart of a method for determining a terminal identity provided by yet another embodiment of the present disclosure.
FIG. 7 is a schematic diagram of a flow chart of a method for determining a terminal identity provided by yet another embodiment of the present disclosure.
FIG. 8 is a schematic diagram of a flow chart of a method for determining a terminal identity provided by an embodiment of the present disclosure.
FIG. 9 is a schematic diagram of a flow chart of a method for determining a terminal identity provided by an embodiment of the present disclosure.
FIG. 10 is a schematic diagram of a flow chart of a method for determining a terminal identity provided by an embodiment of the present disclosure.
FIG. 11 is a schematic diagram of a flow chart of a method for determining a terminal identity provided by an embodiment of the present disclosure.
FIG. 12 is a schematic diagram of a flow chart of a method for determining a terminal identity provided by an embodiment of the present disclosure.
FIG. 13 is a schematic diagram of a flow chart of a method for determining a terminal identity provided by an embodiment of the present disclosure.
FIG. 14 is a schematic diagram of a flow chart of a method for determining a terminal identity provided by an embodiment of the present disclosure.
FIG. 15 is a schematic diagram of a flow chart of a method for determining a terminal identity provided by an embodiment of the present disclosure.
FIG. 16 is a schematic diagram of a flow chart of a method for determining a terminal identity provided by an embodiment of the present disclosure.
FIG. 17 is a schematic diagram of a flow chart of a method for determining a terminal identity provided by an embodiment of the present disclosure.
FIG. 18 is a schematic diagram of a flow chart of a method for determining a terminal identity provided by an embodiment of the present disclosure.
FIG. 19 is a schematic diagram of a flow chart of a method for determining a terminal identity provided by an embodiment of the present disclosure.
FIG. 20 is a schematic diagram of a flow chart of a method for determining a terminal identity provided by an embodiment of the present disclosure.
FIG. 21 is a schematic diagram of a flow chart of a method for determining a terminal identity provided by an embodiment of the present disclosure.
FIG. 22 is a schematic diagram of a flow chart of a method for determining a terminal identity provided by an embodiment of the present disclosure.
FIG. 23 is a structural schematic diagram of a communication apparatus provided by an embodiment of the present disclosure.
FIG. 24 is a structural schematic diagram of a communication apparatus provided by an embodiment of the present disclosure.
FIG. 25 is a structural schematic diagram of a communication apparatus provided by another embodiment of the present disclosure.
FIG. 26 is a structural schematic diagram of a communication apparatus provided by an embodiment of the present disclosure.
FIG. 27 is a structural schematic diagram of a chip provided by an embodiment of the present disclosure.

### DETAILED DESCRIPTION

Reference will now be made in detail to example embodiments, examples of which are illustrated in the accompanying drawings. When the following description refers to the drawings, unless otherwise indicated, the same numbers in different drawings represent the same or similar elements. Implementations described in the following example embodiments do not represent all implementations consistent with the embodiments of the present disclosure. Rather, they are merely examples of apparatus and methods consistent with some aspects of the embodiments of the present disclosure as recited in the appended claims.

The terms used in the embodiments of the present disclosure are for the purpose of describing specific embodiments only and are not intended to limit the embodiments of the present disclosure. As used in the embodiments of the present disclosure and the appended claims, the singular forms "a", "an", and "the" are intended to include the plural forms as well, unless the context clearly indicates otherwise. It should also be understood that the term "and/or" used herein refers to and encompasses any and all possible combinations of one or more of the associated listed items.

It should be understood that although the terms first, second, third, etc. may be used to describe various information in the embodiments of the present disclosure, the information should not be limited to these terms. These terms are used only to distinguish information of the same type from one another. For example, without departing from the scope of the embodiments of the present disclosure, the first information may also be referred to as the second information, and similarly, the second information may also be referred to as the first information. Depending on the context, the word "if" as used herein may be interpreted as "when" or "in a case that" or "in response to determining that".

The embodiments of the present disclosure are described in detail below, examples of which are illustrated in the accompanying drawings, where the same or similar reference numerals refer to the same or similar elements throughout. The embodiments described below with reference to the accompanying drawings are exemplary and are intended to be used to explain the present disclosure, but should not be construed as limiting the present disclosure.

In order to better understand a method for determining a terminal identity provided by the embodiments of the present disclosure, the communication system to which the embodiment of the present disclosure is applicable is first described below.

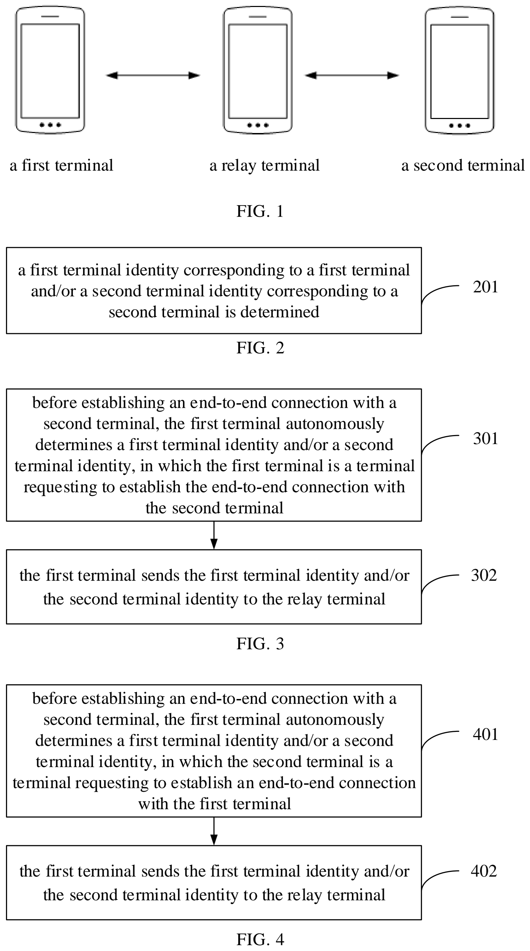

Please refer to FIG. 1, which is a schematic diagram of an architecture of a communication system provided in an embodiment of the present disclosure. The communication system may include but is not limited to a first terminal, a relay terminal, and a second terminal. The first terminal may establish an end-to-end connection with the second terminal through the relay terminal. Optionally, the number and form of devices shown in FIG. 1 are used for example and do not constitute a limitation on the embodiments of the present disclosure. In actual applications, one or more first terminals, or one or more relay terminals, or one or more second terminals may be included. Optionally, the communication system shown in FIG. 1 includes one first terminal, one relay terminal, and one second terminal as an example.

It should be noted that the technical solutions of the embodiments of the present disclosure are applicable to various communication systems. For example: a long term evolution (LTE) system, a fifth generation (5G) mobile communication system, a 5G new radio (NR) system, or other future new mobile communication systems.

The terminal in the embodiments of the present disclosure (i.e., the aforementioned first terminal, second terminal or relay terminal) may be an entity on a user side for receiving or transmitting signals, such as a mobile phone. The first terminal or the second terminal may also be referred to as a terminal, a user equipment (UE), a mobile station (MS), a mobile terminal (MT), etc. The first terminal or the second terminal may be a car with communication function, a smart car, a mobile phone, a wearable device, a Pad, a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the present disclosure do not limit the specific technology and specific device form adopted by the UE.

It can be understood that the communication system described in the embodiments of the present disclosure is for the purpose of more clearly illustrating the technical solution of the embodiments of the present disclosure, and does not constitute a limitation on the technical solutions provided by the embodiments of the present disclosure. A person skilled in the art can know that with the evolution of the system architecture and the emergence of new service scenarios, the technical solutions provided by the embodiments of the present disclosure are also applicable to similar technical problems.

The method, the apparatus, the device for determining a terminal identity and a storage medium provided by the embodiments of the present disclosure are described in detail below with reference to the accompanying drawings.

It should be noted that in the present disclosure, the method for determining a terminal identity provided in any embodiment may be executed alone, and any implementation in the embodiments may also be executed alone, or combined with other embodiments, or possible implementation methods in other embodiments, and may also be executed together with any technical solution in the related art.

FIG. 2 is a flow chart of a method for determining a terminal identity provided by an embodiment of the present disclosure. The method is performed by a first terminal. As shown in FIG. 2, the method for determining a terminal identity may include the following steps.

Step 201, a first terminal identity corresponding to a first terminal and/or a second terminal identity corresponding to a second terminal is determined.

Optionally, in an embodiment of the present disclosure, the second terminal may be a terminal that needs to establish an end-to-end (i.e., the aforementioned U2U) connection with the first terminal through a relay terminal. That is, in an embodiment of the present disclosure, the first terminal and the second terminal are both remote terminals in the end-to-end connection.

Optionally, in an embodiment of the present disclosure, for remote terminals that need to establish the end-to-end connection, it is usually required for a certain remote terminal to request to establish the end-to-end connection with another remote terminal. For example, it may send a direct communication request (DCR) message to the other remote terminal through the relay terminal, to request to establish the end-to-end connection with the other remote terminal, and when a direct communication accept (DCA) message sent by the other remote terminal through the relay terminal is received, it is considered that the end-to-end connection is established with the other remote terminal.

Optionally, in an embodiment of the present disclosure, the remote terminal requesting to establish the end-to-end connection may be referred to as a source remote terminal or a source U2U end terminal or other names, which are not limited in the present disclosure (the related concepts of the source remote terminal that appear later are similar to this), and the remote terminal that receives the request may be referred to as a target remote terminal or a target U2U end terminal or other names, which are not limited in the present disclosure (the related concepts of the target remote terminal that appear later are similar to this).

Optionally, in an embodiment of the present disclosure, the above-mentioned first terminal may be a terminal requesting to establish the end-to-end connection with the second terminal, i.e., the first terminal may be a source remote terminal, and the second terminal may be a target remote terminal; or, in another embodiment of the present disclosure, the second terminal may be a terminal requesting to establish the end-to-end connection with the first terminal, i.e., the first terminal may be a target remote terminal, and the second terminal may be a source remote terminal.

Optionally, in an embodiment of the present disclosure, after the first terminal establishes the end-to-end connection with the second terminal through the relay terminal, the relay terminal may be used to implement forwarding transmission between the first terminal and the second terminal. For example, when the first terminal sends a message to the second terminal, the message may be first sent to the relay terminal, and then the relay terminal forwards the message to the second terminal. Also, when the second terminal sends a message to the first terminal, the message may be first sent to the relay terminal, and then the relay terminal forwards the message to the first terminal.

Optionally, in an embodiment of the present disclosure, the reason for determining the first terminal identity and/or the second terminal identity is to enable the first terminal identity to uniquely indicate the first terminal and the second terminal identity to uniquely indicate the second terminal. The message sent by the first terminal to the second terminal through the relay terminal may carry the first terminal identity and/or the second terminal identity. For example, the message sent by the first terminal to the second terminal may carry the first terminal identity and/or the second terminal identity, or the message sent by the second terminal to the first terminal may carry the first terminal identity and/or the second terminal identity. Thus, the relay terminal may identify which terminal sends the message and/or which terminal receives the message based on the first terminal identity and/or the second terminal identity, thereby accurately forwarding the message to the corresponding second terminal or first terminal.

Optionally, in an embodiment of the present disclosure, the first terminal identity may be a local ID of the first terminal, and the first terminal identity may be associated with and correspond to an identification address of the first terminal. Optionally, in an embodiment of the present disclosure, the identification address of the first terminal mentioned above may be understood as an address for identifying the first terminal, or may be understood as an address uniquely indicating the first terminal. For example, the identification address of the first terminal may be a layer 2 address of the first terminal. For example, the identification address of the first terminal may be an application layer address or other address of the first terminal, which is not limited in the present disclosure (the related concepts of the identification address of the first terminal that appear later are similar to this). Although the identification address of the first terminal may uniquely indicate the first terminal, a bit length of the identification address of the first terminal is relatively long (for example, the layer 2 address is generally 32 bits). If the identification address of the first terminal is used to indicate the first terminal, more resources will be occupied, thereby requiring more transmission resources. Therefore, it needs to allocate the first terminal identity to the first terminal, a bit length of the first terminal identity is relatively short (for example, it can be 8 bits), and it occupies fewer resources. In addition, the first terminal identity is configured to be associated with and correspond to the identification address of the first terminal. In this way, the first terminal identity may uniquely indicate the first terminal, and subsequently, when the first terminal sends a message and/or the second terminal sends a message to the first terminal, the first terminal identity may be carried (for example, the first terminal identity may be carried in an SRAP header of the message), so that the relay terminal can accurately forward the message based on the first terminal identity.

Similarly, in an embodiment of the present disclosure, the second terminal identity may be a local ID of the second terminal, and the second terminal identity may be associated with and correspond to an identification address of the second terminal. Optionally, in an embodiment of the present disclosure, the identification address of the second terminal may be understood as an address for identifying the second terminal, or may be understood as an address uniquely indicating the second terminal. For example, the identification address of the second terminal may be a layer 2 address of the second terminal. For example, the identification address of the second terminal may be an application layer address or other address of the second terminal, which is not limited in the present disclosure (the related concepts of the identification address of the second terminal that appear later are similar to this). Furthermore, by assigning the second terminal identity to the second terminal and configuring the second terminal identity to be associated with and correspond to the identification address of the second terminal, the second terminal identity may be made to uniquely indicate the second terminal. Subsequently, when the second terminal sends a message to the first terminal and/or when the first terminal sends a message, the second terminal identity may be carried (for example, the second terminal identity may be carried in an SRAP header of the message), so that the relay terminal can accurately forward the message based on the second terminal identity.

Optionally, in an embodiment of the present disclosure, determining by the first terminal the first terminal identity and/or the second terminal identity may include at least one of the following:
autonomously determining, by the first terminal, the first terminal identity and/or the second terminal identity;
receiving the first terminal identity and/or the second terminal identity sent by a first base station; that is, the first terminal identity and/or the second terminal identity is determined by the first base station and sent to the first terminal, and the first base station may be a serving base station for the first terminal;
receiving the first terminal identity and/or the second terminal identity sent by the relay terminal; that is, the first terminal identity and/or the second terminal identity is determined by the relay terminal and sent to the first terminal.

For a detailed description of determining, by the first terminal, the first terminal identity and/or the second terminal identity above-mentioned, please refer to the following descriptions of the embodiments.

In summary, in the methods for determining a terminal identity provided in the embodiments of the present disclosure, the first terminal identity corresponding to the first terminal and/or the second terminal identity corresponding to the second terminal can be determined. It can be seen that the present disclosure provides the methods for determining the terminal identity, which can be used to determine the terminal identity for a terminal connected through the end-to-end connection, so that subsequent relay terminals can accurately forward the message based on the terminal identity, thereby ensuring the communication stability between the terminals in the end-to-end connection.

FIG. 3 is a flow chart of a method for determining a terminal identity provided by an embodiment of the present disclosure. The method is performed by a first terminal. As shown in FIG. 3, the method for determining a terminal identity may include the following steps.

Step 301, before establishing an end-to-end connection with a second terminal, the first terminal autonomously determines a first terminal identity and/or a second terminal identity, in which the first terminal is a terminal requesting to establish the end-to-end connection with the second terminal.

Optionally, in an embodiment of the present disclosure, when the first terminal is the terminal requesting to establish the end-to-end connection with the second terminal, it means that the first terminal is a source remote terminal and the second terminal is a target remote terminal.

Optionally, in an embodiment of the present disclosure, when the first terminal is the terminal requesting to establish the end-to-end connection with the second terminal, the above-mentioned "before establishing an end-to-end connection with the second terminal" may be understood, for example, as: before the first terminal sends an end-to-end DCR message to the second terminal through the relay terminal.

Optionally, in an embodiment of the present disclosure, the embodiment of FIG. 3 may be applied to a scenario where a PC5 connection has been established between the first terminal and the relay terminal, and a PC5 connection has also been established between the relay terminal and the second terminal, but an end-to-end connection has not yet been established between the first terminal and the second terminal through the relay terminal.

Optionally, in an embodiment of the present disclosure, the embodiment of FIG. 3 may be applied to a first terminal in a specific state. For example, when the first terminal is in the specific state, the method of the embodiment of FIG. 3 may be executed. Optionally, the specific state may include, for example, at least one of: a radio resource control (RRC) idle state (IDLE), an RRC inactivate state (INACTIVE), an out of coverage (OoC) state, a mode2 mode, etc. The mode 2 mode means that when the first terminal is in the mode 2 mode, the first terminal autonomously selects an SL communication resource in a resource pool.

Optionally, in another embodiment of the present disclosure, the embodiment of FIG. 3 may not limit the state of the first terminal, for example, the method of the embodiment of FIG. 3 may be executed regardless of the first terminal being in any state or operating in any mode. For example, regardless of whether the first terminal is in any state of RRCIDLE, RRCINACTIVE, an RRC connected state (CONNECTED), an OoC state, a mode2 mode, or a model mode, the terminal may perform the method of the embodiment of FIG. 3. The model mode means that when the first terminal is in the model mode, the first terminal uses an SL communication resource scheduled by a network. The network-scheduled SL communication resource includes a network-scheduled dynamic SL communication resource (dynamic SL grant) and/or a network-configured SL communication resource (configured SL grant).

In addition, for detailed introductions of the first terminal identity and the second terminal identity, reference can be made to the contents of the above embodiments.

Step 302, the first terminal sends the first terminal identity and/or the second terminal identity to the relay terminal.

Optionally, in an embodiment of the present disclosure, sending the first terminal identity and/or the second terminal identity to the relay terminal may include: sending an association relationship between an identification address (such as a layer 2 address) of the first terminal and the first terminal identity to the relay terminal, and/or sending an association relationship between an identification address (such as a layer 2 address) of the second terminal and the second terminal identity to the relay terminal. Alternatively, in another embodiment of the present disclosure, sending the first terminal identity and/or the second terminal identity to the relay terminal may include: sending the first terminal identity and/or the second terminal identity only to the relay terminal.

Optionally, in an embodiment of the present disclosure, the first terminal identity and/or the second terminal identity is sent to the relay terminal, so that the relay terminal may store the first terminal identity and/or the second terminal identity, thereby enabling the relay terminal to subsequently accurately forward messages between the first terminal and the second terminal based on the first terminal identity and/or the second terminal identity. At the same time, the relay terminal may send the first terminal identity and/or the second terminal identity to the second terminal, and the second terminal may store the first terminal identity and/or the second terminal identity. When the second terminal subsequently sends a message to the first terminal through the relay terminal, the first terminal identity and/or the second terminal identity may be carried in the message, thereby enabling the relay terminal to accurately forward the message based on the first terminal identity and/or the second terminal identity.

Optionally, in an embodiment of the present disclosure, the first terminal may send the first terminal identity and/or the second terminal identity to the relay terminal via a PC5 signaling. In some embodiments, the PC5 signaling may be a PC5 RRC signaling, for example, a RRCReconfigurationSidelink (RRC reconfiguration sidelink) signaling. In some other embodiments, the PC5 signaling may be a PC5 Medium Access Control Control Element (MAC CE) signaling.

Optionally, in an embodiment of the present disclosure, the PC5 signaling may be included in a Sidelink Medium Access Control Protocol Data Unit (SL MAC PDU) and sent to the relay terminal, in which a source address of the SL MAC PDU including the PC5 signaling may be an identification address/a layer 2 address of the first terminal that sends the PC5 signaling, and/or a target address of the SL MAC PDU including the PC5 signaling may be the identification address/a layer 2 address of the relay terminal that receives the PC5 signaling. Thus, after the relay terminal receives the PC5 signaling, it may determine that the PC5 signaling is sent by the first terminal based on the source address of the SL MAC PDU including the PC5 signaling, and/or it may determine that the PC5 signaling is sent to itself based on the target address of the SL MAC PDU including the PC5 signaling, thereby achieving successful transmission of the PC5 signaling, and then achieving successful transmission of the first terminal identity and/or the second terminal identity in the PC5 signaling.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 4 is a flow chart of a method for determining a terminal identity provided by an embodiment of the present disclosure. The method is performed by a first terminal. As shown in FIG. 4, the method for determining a terminal identity may include the following steps.

Step 401, before establishing an end-to-end connection with a second terminal, the first terminal autonomously determines a first terminal identity and/or a second terminal identity, in which the second terminal is a terminal requesting to establish an end-to-end connection with the first terminal.

Optionally, in an embodiment of the present disclosure, when the second terminal is a terminal requesting to establish the end-to-end connection with the first terminal, it means that the first terminal is a target remote terminal, and the second terminal is a source remote terminal.

Optionally, in an embodiment of the present disclosure, when the second terminal is a terminal requesting to establish the end-to-end connection with the first terminal, the above-mentioned "before establishing an end-to-end connection with the second terminal" may be understood, for example, as: before the second terminal sends an end-to-end DCR message to the first terminal through the relay terminal.

Optionally, in an embodiment of the present disclosure, the embodiment of FIG. 4 may be applied to a scenario where a PC5 connection has been established between the first terminal and the relay terminal, and a PC5 connection has also been established between the relay terminal and the second terminal, but an end-to-end connection has not yet been established between the first terminal and the second terminal through the relay terminal.

It should be noted that, with respect to the scheme of determining the first terminal identity and/or the second terminal identity before the first terminal establishes the end-to-end connection with the second terminal in the embodiment of FIG. 4, when the second terminal is a terminal requesting to establish the end-to-end connection with the first terminal, the second terminal will first autonomously determine with which terminal to establish the end-to-end connection. As a result, the second terminal will autonomously know that it is specifically going to establish the end-to-end connection with the first terminal, while the first terminal cannot autonomously know with which terminal it is going to establish the end-to-end connection. Therefore, before determining the first terminal identity and/or the second terminal identity, the first terminal should first determine with which terminal it is going to establish the end-to-end connection, that is, it should first determine which terminal is the second terminal, so that it may subsequently successfully and autonomously determine the corresponding second terminal identity for the second terminal.

Optionally, in an embodiment of the present disclosure, a method for the first terminal to determine which terminal is the second terminal may include: the first terminal receives a discovery request message and/or a DCR message sent by the second terminal (such as sent by the second terminal directly to the first terminal, and/or sent by the second terminal to the first terminal through the relay terminal), in which the discovery request message and/or the DCR message may carry information such as a user information identity of the first terminal and/or a user information identity of the second terminal. The first terminal may determine that the second terminal expects to establish the end-to-end connection with itself based on the user information identity of the second terminal. Thus, before establishing the end-to-end connection with the second terminal, the first terminal may autonomously determine the first terminal identity and/or the second terminal identity, so that the end-to-end connection with the second terminal may be established subsequently based on the first terminal identity and/or the second terminal identity.

Optionally, in an embodiment of the present disclosure, the embodiment of FIG. 4 may be applied to a first terminal in a specific state. For example, when the first terminal is in a specific state, the method of the embodiment of FIG. 4 may be executed. Optionally, the specific state may include, for example, at least one of RRCIDLE, RRCINACTIVE, an OoC state, a mode2 mode, etc. The mode 2 mode means that when the first terminal is in the mode 2 mode, the first terminal autonomously selects an SL communication resource in a resource pool.

Optionally, in another embodiment of the present disclosure, the embodiment of FIG. 4 may not limit the state of the first terminal, for example, the method of the embodiment of FIG. 4 may be executed regardless of the first terminal being in any state or operating in any mode. For example, no matter whether the first terminal is in any state of RRCIDLE, RRCINACTIVE, RRC CONNECTED, an OoC state, a mode2 mode, or a model mode, the terminal may perform the method of the embodiment of FIG. 4. The mode1 mode means that when the first terminal is in the model mode, the first terminal uses an SL communication resource scheduled by a network. The network-scheduled SL communication resource includes a network-scheduled dynamic SL communication resource (dynamic SL grant) and/or a network-configured SL communication resources (configured SL grant).

In addition, for detailed introductions of the first terminal identity and the second terminal identity, reference can be made to the contents of the above embodiments.

Step 402, the first terminal sends the first terminal identity and/or the second terminal identity to the relay terminal.

For detailed descriptions of step 402, please refer to the description of the aforementioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

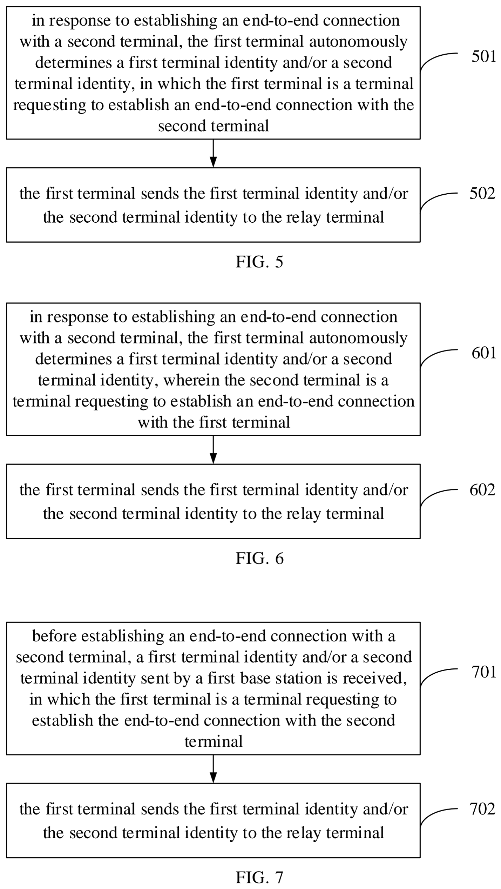

FIG. 5 is a flow chart of a method for determining a terminal identity provided by an embodiment of the present disclosure. The method is performed by a first terminal. As shown in FIG. 5, the method for determining a terminal identity may include the following steps.

Step 501, in response to establishing an end-to-end connection with a second terminal, the first terminal autonomously determines a first terminal identity and/or a second terminal identity, in which the first terminal is a terminal requesting to establish an end-to-end connection with the second terminal.

Optionally, in an embodiment of the present disclosure, when the first terminal is a terminal requesting to establish the end-to-end connection with the second terminal, the above-mentioned "establishing an end-to-end connection with the second terminal" may be understood, for example, as: when the first terminal receives the end-to-end DCA message sent by the second terminal through the relay terminal, and/or after the first terminal receives an end-to-end DCA message sent by the second terminal through the relay terminal.

**In** addition, for the applicable scenarios of the embodiment of FIG. 5, the related introductions of the first terminal and the second terminal, and other detailed introductions of step 501, reference can be made to the contents of the above embodiments.

Step 502, the first terminal sends the first terminal identity and/or the second terminal identity to the relay terminal.

For detailed descriptions of step 502, reference can be made to the contents of the above embodiments.

**In** summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 6 is a flow chart of a method for determining a terminal identity provided by an embodiment of the present disclosure. The method is performed by a first terminal. As shown in FIG. 6, the method for determining a terminal identity may include the following steps.

Step 601, in response to establishing an end-to-end connection with a second terminal, the first terminal autonomously determines a first terminal identity and/or a second terminal identity, wherein the second terminal is a terminal requesting to establish an end-to-end connection with the first terminal.

Optionally, in an embodiment of the present disclosure, when the second terminal is a terminal requesting to establish the end-to-end connection with the first terminal, the above-mentioned "in response to establishing an end-to-end connection with a second terminal" may be understood, for example, as: when the first terminal sends an end-to-end DCA message to the second terminal through the relay terminal, and/or after the first terminal sends an end-to-end DCA message to the second terminal through the relay terminal.

In addition, for the applicable scenarios of the embodiment of FIG. 6, the related introductions of the first terminal and the second terminal, other detailed introductions of step 601, etc., reference can be made to the contents of the above embodiments.

Step 602, the first terminal sends the first terminal identity and/or the second terminal identity to the relay terminal.

For detailed descriptions of step 602, reference can be made to the contents of the above embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 7 is a flow chart of a method for determining a terminal identity provided by an embodiment of the present disclosure. The method is performed by a first terminal. As shown in FIG. 7, the method for determining a terminal identity may include the following steps.

Step 701: before establishing an end-to-end connection with a second terminal, a first terminal identity and/or a second terminal identity sent by a first base station is received, in which the first terminal is a terminal requesting to establish the end-to-end connection with the second terminal.

Optionally, in an embodiment of the present disclosure, the embodiment of FIG. 7 may be applied to the scenario where a PC5 connection has been established between the first terminal and the relay terminal, and a PC5 connection has also been established between the relay terminal and the second terminal, but an end-to-end connection has not yet been established between the first terminal and the second terminal through the relay terminal.

Optionally, in an embodiment of the present disclosure, the first base station may be a serving base station for the first terminal.

Optionally, in an embodiment of the present disclosure, the first terminal may send an identification address of the first terminal (e.g., a layer 2 address) and/or an identification address of the second terminal (e.g., a layer 2 address) to the first base station, so that the first base station may configure the associated first terminal identity for the identification address of the first terminal, and/or configure the associated second terminal identity for the identification address of the second terminal. Optionally, the first terminal may send the identification address of the first terminal and/or the identification address of the second terminal to the first base station via sidelink user equipment (UE) information (SUI).

Optionally, in an embodiment of the present disclosure, the above-mentioned receiving the first terminal identity and/or the second terminal identity sent by the first base station may include: receiving an association relationship between the identification address of the first terminal and the first terminal identity sent by the first base station, and/or receiving an association relationship between the identification address of the second terminal and the second terminal identity sent by the first base station. Or the above-mentioned receiving the first terminal identity and/or the second terminal identity sent by the first base station may include: only receiving the first terminal identity of the first terminal and/or the second terminal identity of the second terminal sent by the first base station.

Optionally, in an embodiment of the present disclosure, the embodiment of FIG. 7 may be applied to a first terminal in a specific state. For example, when the first terminal is in a specific state, the method of the embodiment of FIG. 7 may be executed. Optionally, the specific state may include, for example, at least one of an RRC connected state, a mode 1 mode, etc. The mode 1 mode means that when the first terminal is in the mode 1 mode, the first terminal uses an SL communication resource scheduled by a network. The network-scheduled SL communication resource includes a network-scheduled dynamic SL communication resource (dynamic SL grant) and/or a network-configured SL communication resource (configured SL grant).

In addition, for detailed introductions of the first terminal identity and the second terminal identity, reference can be made to the contents of the above embodiments.

Step 702, the first terminal sends the first terminal identity and/or the second terminal identity to the relay terminal.

For detailed descriptions of step 702, reference can be made to the contents of the above embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

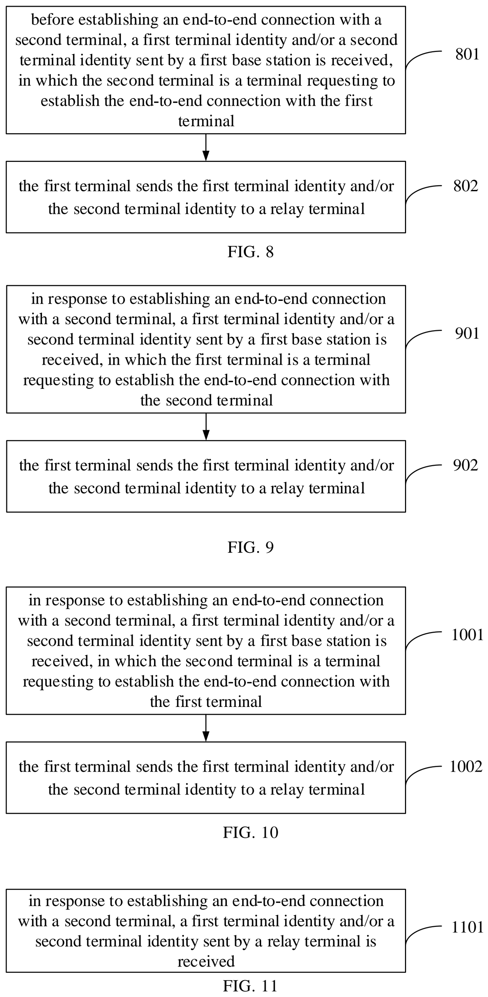

FIG. 8 is a flow chart of a method for determining a terminal identity provided by an embodiment of the present disclosure. The method is performed by a first terminal. As shown in FIG. 8, the method for determining a terminal identity may include the following steps.

Step 801, before establishing an end-to-end connection with a second terminal, a first terminal identity and/or a second terminal identity sent by a first base station is received, in which the second terminal is a terminal requesting to establish the end-to-end connection with the first terminal.

For the applicable scenarios of the embodiment of FIG. 8, the related introductions of the first base station, the relevant introductions of the first terminal and the second terminal, and other detailed introductions of step 801, please refer to the contents of the above embodiments.

Step 802, the first terminal sends the first terminal identity and/or the second terminal identity to a relay terminal.

For detailed descriptions of step 802, reference can be made to the contents of the above embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection

FIG. 9 is a flow chart of a method for determining a terminal identity provided by an embodiment of the present disclosure. The method is performed by a first terminal. As shown in FIG. 9, the method for determining a terminal identity may include the following steps.

Step 901, in response to establishing an end-to-end connection with a second terminal, a first terminal identity and/or a second terminal identity sent by a first base station is received, in which the first terminal is a terminal requesting to establish the end-to-end connection with the second terminal.

For the applicable scenarios of the embodiment of FIG. 9, the related introductions of the first base station, the relevant introductions of the first terminal and the second terminal, and other detailed introductions of step 901, please refer to the contents of the above embodiments.

Step 902, the first terminal sends the first terminal identity and/or the second terminal identity to a relay terminal.

For detailed descriptions of step 902, reference can be made to the contents of the above embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 10 is a flow chart of a method for determining a terminal identity provided by an embodiment of the present disclosure. The method is performed by a first terminal. As shown in FIG. 10, the method for determining a terminal identity may include the following steps.

Step 1001, in response to establishing an end-to-end connection with a second terminal, a first terminal identity and/or a second terminal identity sent by a first base station is received, in which the second terminal is a terminal requesting to establish the end-to-end connection with the first terminal.

The applicable scenarios of the embodiments of Figure 10, the related introductions of the first base station, the related introductions of the first terminal and the second terminal, and other detailed introductions of step 1001 can refer to the contents of the above embodiments.

Step 1002, the first terminal sends the first terminal identity and/or the second terminal identity to a relay terminal.

For detailed descriptions of step 1002, reference can be made to the above-mentioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 11 is a flow chart of a method for determining a terminal identity provided by an embodiment of the present disclosure. The method is performed by a first terminal. As shown in FIG. 11, the method for determining a terminal identity may include the following steps.

Step 1101, in response to establishing an end-to-end connection with a second terminal, a first terminal identity and/or a second terminal identity sent by a relay terminal is received.

Optionally, in an embodiment of the present disclosure, the first terminal identity and/or the second terminal identity may be determined by the relay terminal and sent to the first terminal. Optionally, in an embodiment of the present disclosure, the first terminal identity and/or the second terminal identity may be determined by a serving base station for the relay terminal and sent to the relay terminal, and then sent by the relay terminal to the first terminal.

Optionally, in an embodiment of the present disclosure, the first terminal may be a terminal requesting to establish the end-to-end connection with the second terminal, that is, the first terminal may be a source remote terminal, and the second terminal may be a target remote terminal; or, in another embodiment of the present disclosure, the second terminal may be a terminal for requesting to establish the end-to-end connection with the first terminal, that is, the first terminal may be a target remote terminal, and the second terminal may be a source remote terminal.

Optionally, in an embodiment of the present disclosure, the first terminal may receive the first terminal identity and/or the second terminal identity sent by the relay terminal via a PC5 signaling. In some embodiments, the PC5 signaling may be a PC5 RRC signaling, for example, an RRCReconfigurationSidelink signaling. In some other embodiments, the PC5 signaling may be a PC5 MAC CE signaling.

Optionally, in an embodiment of the present disclosure, the first terminal may receive the PC5 signaling included in an SL MAC PDU sent by the relay terminal, in which a source address of the SL MAC PDU including the PC5 signaling may be an identification address/a layer 2 address of the relay terminal that sends the PC5 signaling, and/or a target address of the SL MAC PDU including the PC5 signaling may be an identification address/a layer 2 address of the first terminal that receives the PC5 signaling. Therefore, after the first terminal receives the PC5 signaling, it may determine that the PC5 signaling is sent by the relay terminal based on the source address of the SL MAC PDU including the PC5 signaling, and/or it may determine that the PC5 signaling is sent to itself based on the target address of the SL MAC PDU including the PC5 signaling, thereby achieving successful transmission of the PC5 signaling, and then achieving successful transmission of the first terminal identity and/or the second terminal identity in the PC5 signaling.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

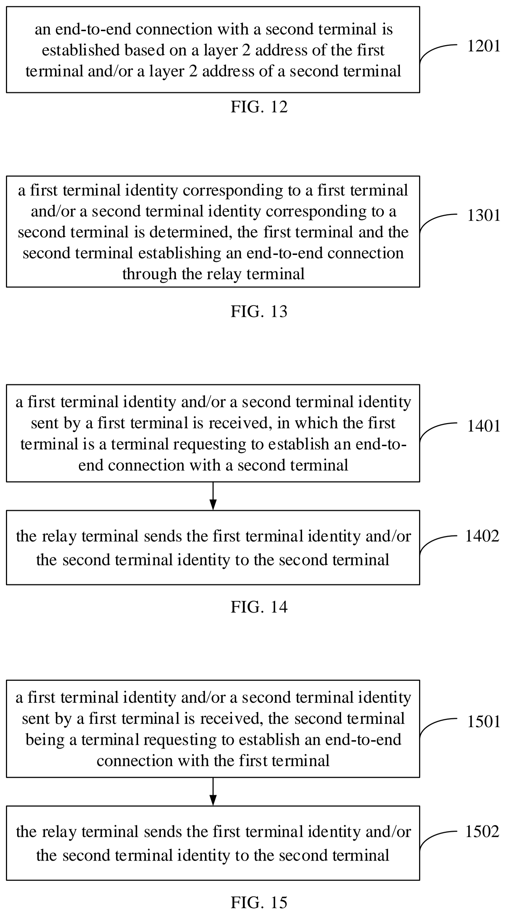

FIG. 12 is a flow chart of a method for determining a terminal identity provided by an embodiment of the present disclosure. The method is performed by a first terminal. As shown in FIG. 12, the method for determining a terminal identity may include the following steps.

Step 1201, an end-to-end connection with a second terminal is established based on a layer 2 address of the first terminal and/or a layer 2 address of a second terminal.

Optionally, the embodiment of FIG. 12 is applicable to a procedure of establishing the end-to-end connection between the first terminal and the second terminal, in a scenario where the first terminal identity and/or the second terminal identity have not yet been determined when the first terminal establishes the end-to-end connection with the second terminal.

Optionally, in an embodiment of the present disclosure, the first terminal may be a terminal requesting to establish the end-to-end connection with the second terminal, that is, the first terminal may be a source remote terminal, and the second terminal may be a target remote terminal; or in another embodiment of the present disclosure, the second terminal may be a terminal requesting to establish the end-to-end connection with the first terminal, that is, the first terminal may be a target remote terminal, and the second terminal may be a source remote terminal.

Optionally, in an embodiment of the present disclosure, the method of establishing the end-to-end connection with the second terminal based on the layer 2 address of the first terminal and/or the layer 2 address of the second terminal may include the following.

When the first terminal expects to send a message to a second terminal through a relay terminal (such as sending an end-to-end DCR message), the message may include (such as an SRAP header of the message may include) an identification address of the first terminal sending the message (such as a layer 2 address), and/or an identification address of the second terminal receiving the message (such as a layer 2 address), whereby the relay terminal may identify which terminal sends the message and/or which terminal receives the message based on the identification address of the first terminal and/or the identification address of the second terminal in the message, thereby accurately forwarding the message to the corresponding second terminal.

Further, when the second terminal expects to send the message to the first terminal through the relay terminal (such as sending an end-to-end DCA message), the message may include (such as an SRAP header of the message may include) the identification address of the second terminal sending the message (such as a layer 2 address), and/or the identification address of the first terminal receiving the message (such as a layer 2 address), so that the relay terminal may identify which terminal sends the message and/or which terminal receives the message based on the identification address of the first terminal and/or the identification address of the second terminal in the message, so that the message may be accurately forwarded to the corresponding first terminal.

Therefore, by including the identification address of the first terminal and/or the identification address of the second terminal in the message, the relay terminal may accurately forward the transmission message between the first terminal and the second terminal, ensuring successful interaction between the first terminal and the second terminal, thereby completing the interaction required for establishing the end-to-end connection between the first terminal and the second terminal, and realizing the end-to-end connection between the first terminal and the second terminal.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 13 is a flow chart of a method for determining a terminal identity provided by an embodiment of the present disclosure. The method is performed by a relay terminal. As shown in FIG. 13, the method for determining a terminal identity may include the following steps.

Step 1301, a first terminal identity corresponding to a first terminal and/or a second terminal identity corresponding to a second terminal is determined, the first terminal and the second terminal establishing an end-to-end connection through the relay terminal.

Optionally, in an embodiment of the present disclosure, determining, by the relay terminal, the first terminal identity and/or the second terminal identity may include at least one of:
autonomously determining, by the relay terminal, the first terminal identity and/or the second terminal identity;
receiving the first terminal identity and/or the second terminal identity sent by the first terminal, that is, the first terminal identity and/or the second terminal identity is determined by the first terminal and sent to the relay terminal; or
receiving the first terminal identity and/or the second terminal identity sent by a second base station, that is, the first terminal identity and/or the second terminal identity is determined by a second base station and sent to the first terminal, and the second base station may be a serving base station for the relay terminal.

For the detailed descriptions of the above-mentioned determining, by the relay terminal, the first terminal identity and/or the second terminal identity, please refer to the descriptions of the subsequent embodiments.

In addition, for detailed descriptions of the first terminal identity, the second terminal identity, the first terminal, and the second terminal, reference can be made to the descriptions of the aforementioned embodiments.

In summary, in the method for determining the terminal identity provided in the embodiments of the present disclosure, the first terminal can establish the end-to-end connection with the second terminal based on the layer 2 address of the first terminal and/or the layer 2 address of the second terminal, and when the end-to-end connection with the second terminal is established, the first terminal identity and/or the second terminal identity can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 14 is a flow chart of a method for determining a terminal identity provided by an embodiment of the present disclosure. The method is performed by a relay terminal. As shown in FIG. 14, the method for determining a terminal identity may include the following steps.

Step 1401, a first terminal identity and/or a second terminal identity sent by a first terminal is received, in which the first terminal is a terminal requesting to establish an end-to-end connection with a second terminal.

Optionally, the embodiment of FIG. 14 may be applied to a scenario where "before the first terminal establishes the end-to-end connection with the second terminal", or may be applied to a scenario where "the first terminal has established the end-to-end connection with the second terminal".

Optionally, in an embodiment of the present disclosure, the first terminal identity and/or the second terminal identity may be determined by the first terminal and sent to the relay terminal, or the first terminal identity and/or the second terminal identity may be determined by the first base station and sent to the first terminal, and then sent by the first terminal to the relay terminal.

Optionally, in an embodiment of the present disclosure, the above-mentioned receiving the first terminal identity and/or the second terminal identity sent by the first terminal may include: receiving an association relationship between the identification address of the first terminal and the first terminal identity sent by the first terminal, and/or receiving an association relationship between the identification address of the second terminal and the second terminal identity sent by the first terminal. Alternatively, the above-mentioned receiving the first terminal identity and/or the second terminal identity sent by the first terminal may include: only receiving the first terminal identity of the first terminal and/or the second terminal identity of the second terminal sent by the first terminal.

For detailed descriptions of step 1401, reference can be made to the descriptions of the aforementioned embodiments.

Step 1402, the relay terminal sends the first terminal identity and/or the second terminal identity to the second terminal.

Optionally, in an embodiment of the present disclosure, the relay terminal sends the first terminal identity and/or the second terminal identity to the second terminal via a PC5 signaling. In some embodiments, the PC5 signaling may be a PC5 RRC signaling, for example, an RRCReconfigurationSidelink signaling. In some other embodiments, the PC5 signaling may be a PC5 MAC CE signaling.

Optionally, in an embodiment of the present disclosure, sending the first terminal identity and/or the second terminal identity to the second terminal may include: sending the association relationship between the identification address (such as a layer 2 address) of the first terminal and the first terminal identity to the second terminal, and/or sending the association relationship between the identification address (such as a layer 2 address) of the second terminal and the second terminal identity to the second terminal. Alternatively, in another embodiment of the present disclosure, sending the first terminal identity and/or the second terminal identity to the second terminal may include: sending only the first terminal identity and/or the second terminal identity to the second terminal.

Optionally, in an embodiment of the present disclosure, the PC5 signaling may be included in an SL MAC PDU and sent to the second terminal, in which a source address of the SL MAC PDU including the PC5 signaling may be an identification address/a layer 2 address of the relay terminal that sends the PC5 signaling, and/or a target address of the SL MAC PDU including the PC5 signaling may be an identification address/a layer 2 address of the second terminal that receives the PC5 signaling. Thus, after the second terminal receives the PC5 signaling, it may determine that the PC5 signaling is sent by the relay terminal based on the source address of the SL MAC PDU including the PC5 signaling, and/or it may determine that the PC5 signaling is sent to itself based on the target address of the SL MAC PDU including the PC5 signaling, thereby achieving successful transmission of the PC5 signaling and successful transmission of the first terminal identity and/or the second terminal identity in the PC5 signaling.

In addition, for detailed descriptions of step 1402, reference can be made to the descriptions of the aforementioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 15 is a flow chart of a method for determining a terminal identity provided by an embodiment of the present disclosure. The method is performed by a relay terminal. As shown in FIG. 15, the method for determining a terminal identity may include the following steps.

Step 1501, a first terminal identity and/or a second terminal identity sent by a first terminal is received, the second terminal being a terminal requesting to establish an end-to-end connection with the first terminal.

Optionally, the embodiment of FIG. 15 may be applied to a scenario where "before the first terminal establishes an end-to-end connection with the second terminal", or may be applied to a scenario where "the first terminal has established an end-to-end connection with the second terminal".

Optionally, in an embodiment of the present disclosure, the first terminal identity and/or the second terminal identity may be determined by the first terminal and sent to the relay terminal, or the first terminal identity and/or the second terminal identity may be determined by the first base station and sent to the first terminal, and then sent by the first terminal to the relay terminal.

For detailed descriptions of step 1501, reference can be made to the descriptions of the aforementioned embodiments.

Step 1502, the relay terminal sends the first terminal identity and/or the second terminal identity to the second terminal.

For detailed descriptions of step 1502, reference can be made the descriptions of the aforementioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

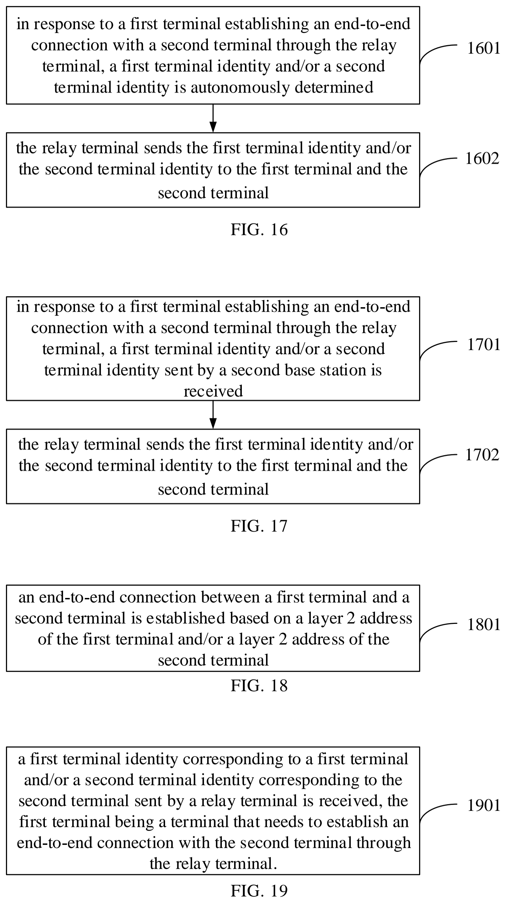

FIG. 16 is a flow chart of a method for determining a terminal identity provided by an embodiment of the present disclosure. The method is performed by a relay terminal. As shown in FIG. 16, the method for determining a terminal identity may include the following steps.

Step 1601, in response to a first terminal establishing an end-to-end connection with a second terminal through the relay terminal, a first terminal identity and/or a second terminal identity is autonomously determined.

Optionally, in an embodiment of the present disclosure, the first terminal may be a terminal requesting to establish the end-to-end connection with the second terminal, that is, the first terminal may be a source remote terminal, and the second terminal may be a target remote terminal; or, in another embodiment of the present disclosure, the second terminal may be a terminal requesting to establish the end-to-end connection with the first terminal, that is, the first terminal may be a target remote terminal, and the second terminal may be a source remote terminal.

Optionally, in an embodiment of the present disclosure, when the first terminal is a terminal requesting to establish the end-to-end connection with the second terminal, the above-mentioned "a first terminal establishing an end-to-end connection with a second terminal through the relay terminal" may be understood as: the relay terminal forwards an end-to-end DCR message from the first terminal to the second terminal, and forwards an end-to-end DCA message from the second terminal to the first terminal; when the second terminal is a terminal requesting to establish the end-to-end connection with the first terminal, the above-mentioned "a first terminal establishing an end-to-end connection with a second terminal through the relay terminal" may be understood as: the relay terminal forwards an end-to-end DCR message from the second terminal to the first terminal, and forwards an end-to-end DCA message from the first terminal to the second terminal.

Optionally, in an embodiment of the present disclosure, the embodiment of FIG. 16 may be applied to a relay terminal in a specific state. For example, when the relay terminal is in a specific state, the methods of the embodiment of FIG. 16 may be executed. Optionally, the specific state may include, for example, at least one of RRCIDLE, RRCINACTIVE, an OoC state, a mode2 mode, etc. The mode 2 mode means that when the first terminal is in the mode 2 mode, the first terminal autonomously selects an SL communication resource in a resource pool. Optionally, in another embodiment of the present disclosure, the embodiment of FIG. 16 may not limit the state of the first terminal. For example, the method of the embodiment of FIG. 16 may be executed regardless of the first terminal being in any state or operating in any mode. For details about this part, reference can be made to the descriptions of the aforementioned embodiments.

In addition, for other detailed descriptions of step 1601, reference can be made to the descriptions of the aforementioned embodiments.

Step 1602, the relay terminal sends the first terminal identity and/or the second terminal identity to the first terminal and the second terminal.

For detailed descriptions of step 1602, reference can be made to the descriptions of the aforementioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 17 is a flow chart of a method for determining a terminal identity provided by an embodiment of the present disclosure. The method is performed by a relay terminal. As shown in FIG. 17, the method for determining a terminal identity may include the following steps.

Step 1701, in response to a first terminal establishing an end-to-end connection with a second terminal through the relay terminal, a first terminal identity and/or a second terminal identity sent by a second base station is received.

For details on how to determine that the first terminal has established the end-to-end connection with the second terminal through the relay terminal, reference can be made to the embodiment of FIG. 16.

Optionally, in an embodiment of the present disclosure, the second base station may be a serving base station for the relay terminal.

Optionally, in an embodiment of the present disclosure, the relay terminal may send an identification address (e.g., a layer 2 address) of the first terminal and/or an identification address (e.g., a layer 2 address) of the second terminal to the second base station, so that the second base station may configure the associated first terminal identity for the identification address of the first terminal and/or configure the associated second terminal identity for the identification address of the second terminal. Optionally, the relay terminal may send the identification address of the first terminal and/or the identification address of the second terminal to the second base station via SUI.

Optionally, in an embodiment of the present disclosure, the above-mentioned "a first terminal identity and/or a second terminal identity sent by a second base station is received" may include: receiving an association relationship between the identification address of the first terminal and the first terminal identity sent by the second base station, and/or receiving an association relationship between the identification address of the second terminal and the second terminal identity sent by the second base station. Alternatively, in another embodiment of the present disclosure, the above-mentioned "a first terminal identity and/or a second terminal identity sent by a second base station is received" may include: only receiving the first terminal identity and/or the second terminal identity sent by the second base station.

Optionally, in an embodiment of the present disclosure, the first terminal may be a terminal requesting to establish the end-to-end connection with the second terminal, that is, the first terminal may be a source remote terminal, and the second terminal may be a target remote terminal; or, in another embodiment of the present disclosure, the second terminal may be a terminal for requesting to establish the end-to-end connection with the first terminal, that is, the first terminal may be a target remote terminal, and the second terminal may be a source remote terminal.

Optionally, in an embodiment of the present disclosure, the embodiment of FIG. 17 may be applied to a relay terminal in a specific state. For example, when the relay terminal is in a specific state, the methods of the embodiment of FIG. 17 may be executed. Optionally, the specific state may include, for example, at least one of an RRC connected state, a mode 1 mode, etc. The mode 1 mode means: when the first terminal is in the mode 1 mode, the first terminal uses an SL communication resource scheduled by a network. The network-scheduled SL communication resource includes a network-scheduled dynamic SL communication resource (dynamic SL grant) and/or a network-configured SL communication resource (configured SL grant). For detailed descriptions of this part, reference can be made to the descriptions of the aforementioned embodiments.

**In** addition, for detailed descriptions of step 1701, reference can be made to the descriptions of the aforementioned embodiments.

Step 1702, the relay terminal sends the first terminal identity and/or the second terminal identity to the first terminal and the second terminal.

For detailed descriptions of step 1702, reference can be made to the descriptions of the aforementioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 18 is a flow chart of a method for determining a terminal identity provided by an embodiment of the present disclosure. The method is performed by a relay terminal. As shown in FIG. 18, the method for determining a terminal identity may include the following steps.

Step 1801, an end-to-end connection between a first terminal and a second terminal is established based on a layer 2 address of the first terminal and/or a layer 2 address of the second terminal.

Optionally, the embodiment of FIG. 18 may be applied to a procedure of establishing the end-to-end connection between the first terminal and the second terminal in a scenario where, when the first terminal establishes the end-to-end connection with the second terminal, the first terminal identity and/or the second terminal identity has not yet been determined.

In addition, for detailed descriptions of step 1801, reference can be made to the descriptions of the aforementioned embodiments.

In summary, in the method for determining the terminal identity provided in the embodiments of the present disclosure, the relay terminal can establish the end-to-end connection between the first terminal and the second terminal based on the layer 2 address of the first terminal and/or the layer 2 address of the second terminal, and when the first terminal and the second terminal establish the end-to-end connection, the relay terminal can determine the first terminal identity and/or the second terminal identity. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 19 is a flow chart of a method for determining a terminal identity provided by an embodiment of the present disclosure. The method is performed by a second terminal. As shown in FIG. 19, the method for determining a terminal identity may include the following steps.

Step 1901, a first terminal identity corresponding to a first terminal and/or a second terminal identity corresponding to the second terminal sent by a relay terminal is received, the first terminal being a terminal that needs to establish an end-to-end connection with the second terminal through the relay terminal.

Optionally, in an embodiment of the present disclosure, the first terminal may be a terminal requesting to establish the end-to-end connection with the second terminal, that is, the first terminal may be a source remote terminal, and the second terminal may be a target remote terminal; or in another embodiment of the present disclosure, the second terminal may be a terminal requesting to establish the end-to-end connection with the first terminal, that is, the first terminal may be a target remote terminal, and the second terminal may be a source remote terminal.

Optionally, in an embodiment of the present disclosure, receiving the first terminal identity corresponding to the first terminal and/or the second terminal identity corresponding to the second terminal sent by the receiving relay terminal may include at least one of the following:
receiving the first terminal identity and/or the second terminal identity sent by the relay terminal before establishing the end-to-end connection with the first terminal; or
receiving the first terminal identity and/or the second terminal identity sent by the relay terminal in response to establishing the end-to-end connection with the first terminal.

Optionally, when the second terminal receives the first terminal identity and/or the second terminal identity sent by the relay terminal before establishing the end-to-end connection with the first terminal, the first terminal identity and/or the second terminal identity may be autonomously determined by the first terminal and sent to the second terminal through the relay terminal. Or, the first terminal identity and/or the second terminal identity may be determined by a first base station (i.e., a serving base station for the first terminal) and then sent to the first terminal, and then sent by the first terminal to the second terminal via the relay terminal.

Optionally, when the second terminal receives the first terminal identity and/or the second terminal identity sent by the relay terminal in response to establishing the end-to-end connection with the first terminal, the first terminal identity and/or the second terminal identity may be autonomously determined by the first terminal and sent to the second terminal through the relay terminal. Or, the first terminal identity and/or the second terminal identity may be determined by the first base station (i.e., the serving base station for the first terminal) and then sent to the first terminal, and then sent by the first terminal to the second terminal through the relay terminal. Or, the first terminal identity and/or the second terminal identity may be determined autonomously by the relay terminal and sent to the second terminal. Or, the first terminal identity and/or the second terminal identity may be determined by a second base station (i.e., a serving base station for the relay terminal) and sent to the relay terminal, and then sent by the relay terminal to the second terminal.

For detailed descriptions of step 1901, reference can be made to the descriptions of the aforementioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

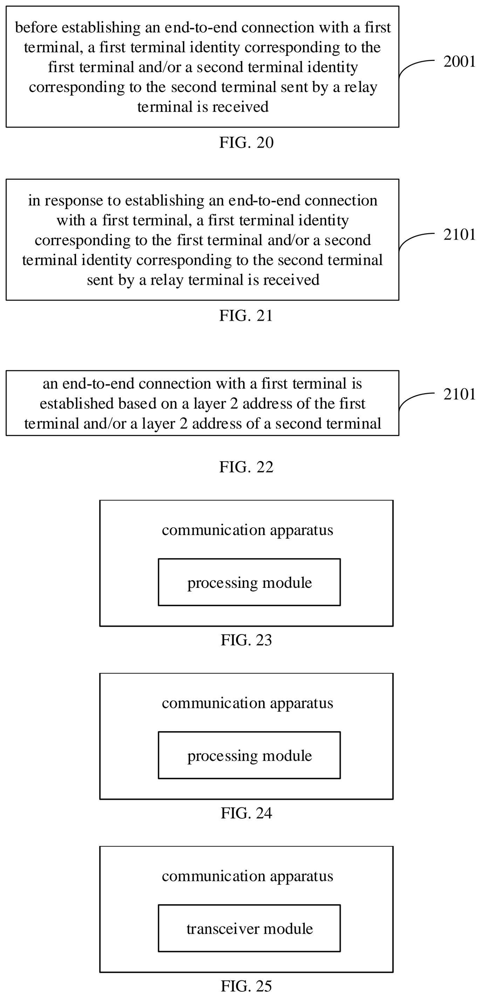

FIG. 20 is a flow chart of a method for determining a terminal identity provided by an embodiment of the present disclosure. The method is performed by a second terminal. As shown in FIG. 20, the method for determining a terminal identity may include the following steps.

Step 2001, before establishing an end-to-end connection with a first terminal, a first terminal identity corresponding to the first terminal and/or a second terminal identity corresponding to the second terminal sent by a relay terminal is received.

Optionally, in an embodiment of the present disclosure, the first terminal identity and/or the second terminal identity may be autonomously determined by the first terminal and sent to the second terminal through the relay terminal. Or, the first terminal identity and/or the second terminal identity may be determined by a first base station (i.e., a serving base station for the first terminal) and sent to the first terminal, and then sent by the first terminal to the second terminal through the relay terminal.

For detailed descriptions of step 2001, reference can be made to the descriptions of the aforementioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

FIG. 21 is a flow chart of a method for determining a terminal identity provided by an embodiment of the present disclosure. The method is performed by a second terminal. As shown in FIG. 21, the method for determining a terminal identity may include the following steps.

Step 2101, in response to establishing an end-to-end connection with a first terminal, a first terminal identity corresponding to the first terminal and/or a second terminal identity corresponding to the second terminal sent by a relay terminal is received.

Optionally, in an embodiment of the present disclosure, the first terminal identity and/or the second terminal identity may be autonomously determined by the first terminal and sent to the second terminal through the relay terminal. Or, the first terminal identity and/or the second terminal identity may be determined by the first base station (i.e., the serving base station for the first terminal) and then sent to the first terminal, and then sent by the first terminal to the second terminal through the relay terminal. Or, the first terminal identity and/or the second terminal identity may be determined autonomously by the relay terminal and sent to the second terminal. Or, the first terminal identity and/or the second terminal identity may be determined by a second base station and sent to the relay terminal, and then sent by the relay terminal to the second terminal.

For detailed descriptions of step 2101, reference can be made to the descriptions of the aforementioned embodiments.

In summary, in the method for determining the terminal identity provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection

FIG. 22 is a flow chart of a method for determining a terminal identity provided by an embodiment of the present disclosure. The method is performed by a second terminal. As shown in FIG. 22, the method for determining a terminal identity may include the following steps.

Step 2201, an end-to-end connection with a first terminal is established based on a layer 2 address of the first terminal and/or a layer 2 address of a second terminal.

Optionally, the embodiment of FIG. 22 may be applied to a procedure of establishing the end-to-end connection between the first terminal and the second terminal in a scenario where, when the first terminal establishes the end-to-end connection with the second terminal, the first terminal identity and/or the second terminal identity has not yet been determined.

For detailed descriptions of step 2201, reference can be made to the descriptions of the aforementioned embodiments.

In summary, in the method for determining the terminal identity provided in the embodiments of the present disclosure, the second terminal can establish the end-to-end connection with the first terminal based on the layer 2 address of the first terminal and/or the layer 2 address of the second terminal, and when the end-to-end connection with the first terminal is established, the second terminal receives the first terminal identity and/or the second terminal identity sent by the relay terminal. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

The followings are example introductions to methods for determining a terminal identity of the embodiments of the present disclosure.

Example 1: a source remote UE allocates local IDs to the source remote UE and a target remote UE, and the source remote UE sends the local IDs of the source remote UE and the target remote UE to a relay UE through a PC5 signaling.

An embodiment: the source remote UE selects the relay UE (step 5). At this time, a PC5 connection has been established between the source remote UE and the relay UE, and a PC5 connection has also been established between the target remote UE and the relay. The source remote UE is responsible for allocating local IDs of the source remote UE and the target remote UE. The local ID of the source remote UE is associated with and corresponds to the layer 2 address of the source remote UE, and the local ID of the target remote UE is associated with and corresponds to the layer 2 address of the target remote UE. The source remote UE sends the local ID of the source remote UE and the local ID of the target remote UE to the relay UE via the PC5 signaling. Specifically, the source remote UE sends the local ID corresponding to the layer 2 address of the source remote UE and the local ID corresponding to the layer 2 address of the target remote UE to the relay UE. The PC5 signaling may be a PC5 RRC signaling, such as an RRCReconfigurationSidelink signaling. The PC5 signaling may also be a PC5 MAC CE signaling.

An embodiment: before the source remote UE establishes the end-to-end connection with the target remote UE through the relay UE (before sending an end-to-end DCR), the source remote UE needs to send the local IDs of the source remote UE and the target remote UE to the relay UE through the PC5 signaling. The PC5 signaling may be the PC5 RRC signaling, such as the RRCReconfigurationSidelink signaling, or may be the PC5 MAC CE. A source address of the PC5 signaling is the layer 2 address of the source remote UE, and a target address of the PC5 signaling is the layer 2 address of the relay UE.

An embodiment: this solution may limit the source remote UE to be in RRC IDLE/INACTIVE or an OOC state, or may limit the source remote UE to operate in a mode2 mode. Optionally, the solution may not impose any restriction on the state of the source remote UE, that is, the solution is applicable regardless of the RRC state of the source remote UE or the operating mode of the source remote UE.

An embodiment: the source remote terminal is a terminal that sends a DCR in a U2U scenario and is determined as the source remote terminal. Optionally, the source remote terminal and the target remote terminal may be referred to by other names, such as a source U2U end terminal and a target U2U end terminal.

Example 2: a serving gNB for a source remote UE allocates local IDs to the source remote UE and a target remote UE, and the source remote UE sends the local IDs of the source remote UE and the target remote UE to a relay UE through a PC5 signaling.

An embodiment: the source remote UE reports layer 2 addresses of the source remote UE and the target remote UE through SUI.

An embodiment: the serving gNB for the source remote UE allocates the local IDs to the source remote UE and the target remote UE, and sends the configuration information to the source remote UE, the source remote UE then sends the configuration (including the local IDs of the source remote UE and the target remote UE) received from the serving gNB to the relay UE through the PC5 signaling. The PC5 signaling may be a PC5 RRC signaling, such as an RRCReconfigurationSidelink signaling; the PC5 signaling may also be a PC5 MAC CE. In this embodiment, the source remote UE may only be in an RRC connected state. Optionally, the source remote UE may be limited to operate in a model mode.

Example 3: a relay UE sends local IDs of a source remote UE and a target remote UE to the target remote UE through a PC5 signaling.

An embodiment: after receiving the PC5 signaling of the local IDs of the source remote UE and the target remote UE sent by the source remote UE, the relay UE sends the local IDs of the source remote UE and the target remote UE to the target remote UE via the PC5 signaling. The PC5 signaling may be a PC5 RRC signaling, such as an RRCReconfigurationSidelink signaling, or may be a PC5 MAC CE. A source address of the PC5 signaling is a layer 2 address of the relay UE, and a target address of the PC5 signaling is a layer 2 address of the target remote UE.

Example 4: a target remote UE allocates local IDs to a source remote UE and the target remote UE, and the target remote UE sends the local IDs of the source remote UE and the target remote UE to a relay UE through a PC5 signaling.

An embodiment: the target remote UE selects the relay UE (step 5). At this time, a PC5 connection has been established between the source remote UE and the relay UE, and a PC5 connection has also been established between the target remote UE and the relay. The other contents of Example 1 of Invention Point 1 are also applicable to the present invention point.

An embodiment: before the source remote UE establishes an end-to-end connection with the target remote UE through the relay UE (before sending an end-to-end DCR), the target remote UE needs to send the local IDs of the source remote UE and the target remote UE to the relay UE through the PC5 signaling. The PC5 signaling may be a PC5 RRC signaling, such as an RRCReconfigurationSidelink signaling, or may be a PC5 MAC CE. A source address of the PC5 signaling is a layer 2 address of the target remote UE, and a target address of the PC5 signaling is a layer 2 address of the relay UE. The other two embodiments in invention point 1 are also applicable to the present invention point.

Example 5: a serving gNB for a target remote UE allocates local IDs to a source remote UE and the target remote UE, and the target remote UE sends the local IDs of the source remote UE and the target remote UE to a relay UE via a PC5 signaling.

An embodiment: the target remote UE reports layer 2 addresses of the source remote UE and the target remote UE through SUI.

An embodiment: the serving gNB for the target remote UE allocates local IDs to the source remote UE and the target remote UE, and sends configuration information to the target remote UE. The target remote UE then sends the configuration (including the local IDs of the source remote UE and the target remote UE) received from the serving gNB to the relay UE via the PC5 signaling. The PC5 signaling may be a PC5 RRC signaling, such as an RRCReconfigurationSidelink signaling; or the PC5 signaling may also be a PC5 MAC CE. In this embodiment, the target remote UE may only be in an RRC connected state. Optionally, the target remote UE may be limited to operate only in a model mode.

Example 6: a relay UE sends local IDs of a source remote UE and a target remote UE to the source remote UE through a PC5 signaling.

An embodiment: after receiving a PC5 signaling of the local IDs of the source remote UE and the target remote UE sent by the target remote UE, the relay UE sends the local IDs of the source remote UE and the target remote UE to the source remote UE via the PC5 signaling. The PC5 signaling may be a PC5 RRC signaling, such as an RRCReconfigurationSidelink signaling, or may be a PC5 MAC CE. A source address of the PC5 signaling is a layer 2 address of the relay UE, and a target address of the PC5 signaling is a layer 2 address of the source remote UE.

Example 7: when a source remote UE and a target remote UE establish an end-to-end connection via a relay UE, an SRAP header carries layer 2 addresses of the source remote UE and the target remote UE.

An embodiment: optionally, in a U2U scenario, the SRAP header of the data packet carries the layer 2 address. Optionally, after the source remote UE and the target remote UE establish the end-to-end connection through the relay UE, the source remote UE (a serving gNB for the source remote UE)/the target remote UE (a serving gNB for the target remote UE)/the relay UE (a serving gNB for the relay UE) may be responsible for allocating the local IDs of the source remote UE and the target remote UE. For the specific solution, reference can be made to the above embodiments.

FIG. 23 is a schematic diagram of the structure of a communication apparatus provided by an embodiment of the present disclosure. As shown in FIG. 23, the apparatus may include:
a processing module, configured to determine a first terminal identity corresponding to a first terminal and/or a second terminal identity corresponding to a second terminal, the second terminal being a terminal that needs to establish an end-to-end connection with the first terminal through a relay terminal.

In summary, in the communication apparatus provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

Optionally, in an embodiment of the present disclosure, the first terminal is a terminal requesting to establish the end-to-end connection with the second terminal; or
the second terminal is a terminal requesting to establish the end-to-end connection with the first terminal.

Optionally, in an embodiment of the present disclosure, the first terminal identity is associated with and corresponds to a layer 2 address of the first terminal; and
the second terminal identity is associated with and corresponds to a layer 2 address of the second terminal.

Optionally, in an embodiment of the present disclosure, the processing module is further configured to:
autonomously determine, by the first terminal, the first terminal identity and/or the second terminal identity.

Optionally, in an embodiment of the present disclosure, the processing module is further configured to:
autonomously determine the first terminal identity and/or the second terminal identity before establishing the end-to-end connection with the second terminal.

Optionally, in an embodiment of the present disclosure, the processing module is further configured to:
autonomously determine the first terminal identity and/or the second terminal identity in response to establishing the end-to-end connection with the second terminal.

Optionally, in an embodiment of the present disclosure, the processing module is further configured to:
receive the first terminal identity and/or the second terminal identity sent by a first base station, in which the first base station is a serving base station for the first terminal.

Optionally, in an embodiment of the present disclosure, the processing module is further configured to:
receive the first terminal identity and/or the second terminal identity sent by the first base station before establishing the end-to-end connection with the second terminal.

Optionally, in an embodiment of the present disclosure, the processing module is further configured to:
receive the first terminal identity and/or the second terminal identity sent by the first base station in response to establishing the end-to-end connection with the second terminal.

Optionally, in an embodiment of the present disclosure, the apparatus is further configured to:
send a layer 2 address of the first terminal and/or a layer 2 address of the second terminal to the first base station.

Optionally, in an embodiment of the present disclosure, the apparatus is further configured to:
send the first terminal identity and/or the second terminal identity to the relay terminal, such that the relay terminal sends the first terminal identity and/or the second terminal identity to the second terminal.

Optionally, in an embodiment of the present disclosure, the processing module is further configured to:
receive the first terminal identity and/or the second terminal identity sent by the relay terminal in response to establishing the end-to-end connection with the second terminal.

Optionally, in an embodiment of the present disclosure, the apparatus is further configured to:
establish the end-to-end connection with the second terminal based on the layer 2 address of the first terminal and/or the layer 2 address of the second terminal.

FIG. 24 is a schematic diagram of the structure of a communication apparatus provided by an embodiment of the present disclosure. As shown in FIG. 24, the apparatus may include:
a processing module, configured to determine a first terminal identity corresponding to a first terminal and/or a second terminal identity corresponding to the second terminal, the first terminal and the second terminal establishing an end-to-end connection through the relay terminal.

In summary, in the communication apparatus provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

Optionally, in an embodiment of the present disclosure, the first terminal is a terminal requesting to establish the end-to-end connection with the second terminal; or
the second terminal is a terminal requesting to establish the end-to-end connection with the first terminal.

Optionally, in an embodiment of the present disclosure, the first terminal identity is associated with and corresponds to a layer 2 address of the first terminal; and
the second terminal identity is associated with and corresponds to a layer 2 address of the second terminal.

Optionally, in an embodiment of the present disclosure, the processing module is further configured to:
receive the first terminal identity and/or the second terminal identity sent by the first terminal.

Optionally, in an embodiment of the present disclosure, the apparatus is further configured to:
send the first terminal identity and/or the second terminal identity to the second terminal.

Optionally, in an embodiment of the present disclosure, the processing module is further configured to:
autonomously determine the first terminal identity and/or the second terminal identity in response to the first terminal establishing the end-to-end connection with the second terminal through the relay terminal.

Optionally, in an embodiment of the present disclosure, the processing module is further configured to:
receive the first terminal identity and/or the second terminal identity sent by a second base station in response to the first terminal establishing the end-to-end connection with the second terminal through the relay terminal, the second base station being a service base station for the relay terminal.

Optionally, in an embodiment of the present disclosure, the apparatus is further configured to:
send the first terminal identity and/or the second terminal identity to the first terminal and the second terminal.

Optionally, in an embodiment of the present disclosure, the apparatus is further configured to:
establish the end-to-end connection between the first terminal and the second terminal based on the layer 2 address of the first terminal and/or the layer 2 address of the second terminal

FIG. 25 is a schematic diagram of the structure of a communication apparatus provided by an embodiment of the present disclosure. As shown in FIG. 25, the apparatus may include:
a transceiver module, configured to receive a first terminal identity corresponding to a first terminal and/or a second terminal identity corresponding to a second terminal sent by a relay terminal, the first terminal being a terminal that needs to establish an end-to-end connection with the second terminal through the relay terminal.

In summary, in the communication apparatus provided in the embodiments of the present disclosure, the first terminal identity corresponding to the first terminal and/or the second terminal identity corresponding to the second terminal can be determined. It can be seen that the present disclosure provides the method for determining the terminal identity, which can be used to determine the terminal identity for the terminal connected through the end-to-end connection, so that subsequently, the relay terminal can accurately forward the message based on the terminal identity, thereby ensuring the communication stability between the terminals in the end-to-end connection.

Optionally, in an embodiment of the present disclosure, the first terminal is a terminal requesting to establish the end-to-end connection with the second terminal; or
the second terminal is a terminal requesting to establish the end-to-end connection with the first terminal.

Optionally, in an embodiment of the present disclosure, the first terminal identity is associated with and corresponds to a layer 2 address of the first terminal; and
the second terminal identity is associated with and corresponds to a layer 2 address of the second terminal.

Optionally, in an embodiment of the present disclosure, the transceiver module is further configured to perform at least one of:
receiving the first terminal identity and/or the second terminal identity sent by the relay terminal before establishing the end-to-end connection with the first terminal; or
receiving the first terminal identity and/or the second terminal identity sent by the relay terminal in response to establishing the end-to-end connection with the first terminal.

Optionally, in an embodiment of the present disclosure, in a case of receiving the first terminal identity and/or the second terminal identity sent by the relay terminal in response to establishing the end-to-end connection with the first terminal, the apparatus is further configured to:
establish the end-to-end connection with the first terminal based on the layer 2 address of the first terminal and/or the layer 2 address of the second terminal.

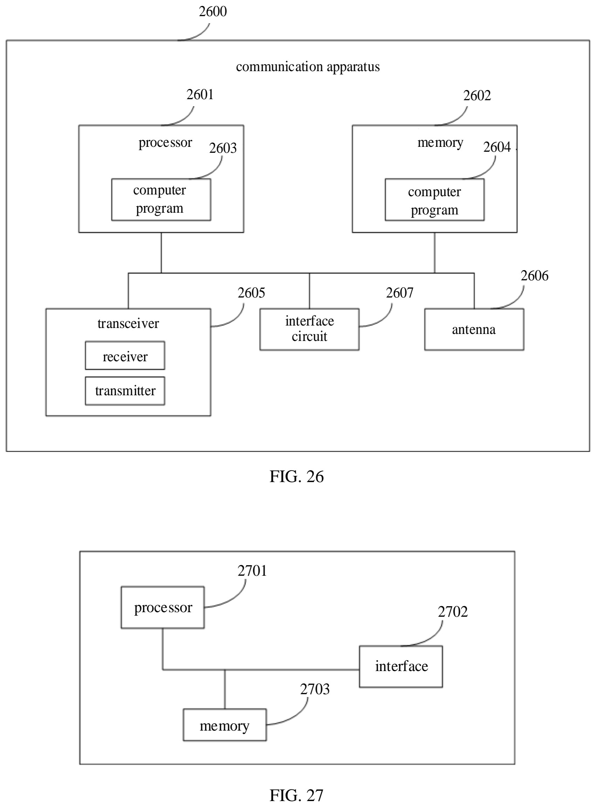

Please refer to FIG. 26, which is a structural diagram of a communication apparatus 2600 provided in an embodiment of the present disclosure. The communication apparatus 2600 may be a network device or a terminal, or a chip, a chip system, or a processor that supports the network device to implement the above methods, or a chip, a chip system, or a processor that supports the terminal to implement the above methods. The apparatus may be used to implement the methods described in the above method embodiments. For details, reference can be made to the descriptions in the above method embodiments.

The communication apparatus 2600 may include one or more processors 2601. The processor 2601 may be a general-purpose processor or a special-purpose processor, etc. For example, it may be a baseband processor or a central processing unit. The baseband processor may be configured to process communication protocols and communication data, and the central processing unit may be configured to control a communication apparatus (such as a base station, a baseband chip, a terminal, a terminal chip, a DU or a CU, etc.), to execute a computer program, and to process computer program data.

Optionally, the communication apparatus 2600 may further include one or more memories 2602, on which a computer program 2604 may be stored, and the processor 2601 executes the computer program 2604, so that the communication apparatus 2600 executes the methods described in the above method embodiments. Optionally, data may also be stored in the memory 2602. The communication apparatus 2600 and the memory 2602 may be provided separately or integrated together.

Optionally, the communication apparatus 2600 may also include a transceiver 2605 and an antenna 2606. The transceiver 2605 may be referred to as a transceiver unit, a transceiver machine, or a transceiver circuit, etc., and is configured to implement a transceiver function. The transceiver 2605 may include a receiver and a transmitter. The receiver may be referred to as a receiver or a receiving circuit, etc., and is configured to implement a receiving function. The transmitter may be referred to as a transmitter or a transmitting circuit, etc., and is configured to implement a transmitting function.

Optionally, the communication apparatus 2600 may further include one or more interface circuits 2607. The interface circuit 2607 is configured to receive code instructions and transmit them to the processor 2601. The processor 2601 runs the code instructions to enable the communication apparatus 2600 to execute the methods described in the above method embodiments.

In an implementation, the processor 2601 may include a transceiver for implementing receiving and transmitting functions. For example, the transceiver may be a transceiver circuit, or an interface, or an interface circuit. The transceiver circuits, interfaces or interface circuits configured to implement the receiving and transmitting functions may be separate or integrated. The above-mentioned transceiver circuit, interface or interface circuit may be configured to read and write codes/data, or the above-mentioned transceiver circuit, interface or interface circuit may be configured to transmit a signal.

In an implementation, the processor 2601 may store a computer program 2603, and the computer program 2603 runs on the processor 2601, so that the communication apparatus 2600 may execute the methods described in the above method embodiments. The computer program 2603 may be embedded in the processor 2601, in which case the processor 2601 may be implemented by hardware.

In an implementation, the communication apparatus 2600 may include a circuit, and the circuit may implement the functions of sending or receiving or communicating in the aforementioned method embodiments. The processor and transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and transceiver may also be manufactured using various IC process technologies, such as complementary metal oxide semiconductor (CMOS), nMetal oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be a network device or a terminal, but the scope of the communication apparatus described in the present application is not limited thereto, and the structure of the communication apparatus may not be limited to FIG. 26. The communication apparatus may be a stand-alone device or may be part of a larger device. For example, the communication apparatus may be:
(1) independent integrated circuit IC, or chip, or a chip system or subsystem;
(2) a set of one or more ICs, and optionally, the IC set may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld device, a mobile unit, a vehicle-mounted device, a network device, a cloud device, an artificial intelligence device, etc.;
(6)Others.

For a case where the communication apparatus may be a chip or a chip system, reference may be made to the structural schematic diagram of the chip shown in FIG. 27. The chip shown in FIG. 27 includes a processor 2701 and an interface 2702. The number of processors 2701 may be one or more, and the number of interfaces 2702 may be multiple.

Optionally, the chip also includes a memory 2703, and the memory 2703 is used to store necessary computer programs and data.

Those skilled in the art can also understand that the various illustrative logical blocks and steps listed in the embodiments of the present disclosure can be implemented by electronic hardware, computer software, or a combination of both. Whether such functionality is implemented through hardware or software depends on the specific application and the design requirements of the entire system. Those skilled in the art may use various methods to implement the described functions for each specific application, but such implementation should not be understood as exceeding the scope of protection of the embodiments of the present disclosure.

The present disclosure also provides a readable storage medium having instructions stored thereon. When the instructions are executed by a computer, the functions of any of the above method embodiments are implemented.

The present disclosure also provides a computer program product. When the computer program product is executed by a computer, the functions of any of the above method embodiments are implemented.

In the above embodiments, all or part of them may be implemented by software, hardware, firmware or any combination thereof. When implementing using software, all or part of the implementation may be in the form of a computer program product. The computer program product includes one or more computer programs. When the computer program is loaded and executed on a computer, the process or function described in the embodiments of the present disclosure is generated in whole or in part. The computer may be a general purpose computer, a special purpose computer, a computer network, or other programmable device. The computer program may be stored in a computer-readable storage medium, or transmitted from one computer-readable storage medium to another computer-readable storage medium. For example, the computer program may be transmitted from a website, computer, server or data center to another website, computer, server or data center via wired (e.g., coaxial cable, optical fiber, digital subscriber line (DSL)) or wireless (e.g., infrared, wireless, microwave, etc.) means. The computer-readable storage medium may be any available medium that can be accessed by a computer, or a data storage device including one or more available media, such as a server or a data center. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)).

A person skilled in the art may understand that the various numerical numbers such as first and second involved in the present disclosure are only used for the convenience of description and are not used to limit the scope of the embodiments of the present disclosure or to indicate the order of sequence.

The at least one in the present disclosure may also be described as one or more, and the multiple may be two, three, four or more, which is not limited in the present disclosure. In the embodiments of the present disclosure, for a type of technical feature, the technical features in this type of technical feature are distinguished by "first", "second", "third", "A", "B", "C" and "D", and there is no order of sequence or size between the technical features described by the "first", "second", "third", "A", "B", "C" and "D".

The corresponding relationships shown in the tables in the present disclosure may be configured or predefined. The values of the information in each table are only examples and can be configured to other values, which are not limited by the present disclosure. When configuring the correspondence between information and parameters, it is not necessarily required to configure all the correspondences illustrated in the tables. For example, in the table in the present disclosure, the corresponding relationships shown in some rows may not be configured. For another example, appropriate deformation adjustments may be made based on the above table, such as splitting, merging, etc. The names of the parameters shown in the titles of the above tables may also be other names understandable to the communication apparatus, and the values or representations of the parameters may also be other values or representations understandable to the communication apparatus. When implementing the above tables, other data structures may also be used, such as arrays, queues, containers, stacks, linear lists, pointers, linked lists, trees, graphs, structures, classes, heaps, hash tables or the like.

The predefined in the present disclosure may be understood as defined, predefined, stored, pre-stored, pre-negotiated, pre-configured, solidified, or pre-burned.

Those skilled in the art will appreciate that the units and algorithm steps of each example described in conjunction with the embodiments disclosed herein may be implemented by electronic hardware, or a combination of computer software and electronic hardware. Whether these functions are performed in hardware or software depends on the specific application and design constraints of the technical solution. The person skilled in the art can use different methods to implement the described functions for each specific application, but such implementation should not be considered to be beyond the scope of the present disclosure.

Those skilled in the art can clearly understand that, for the convenience and brevity of description, the specific working processes of the systems, apparatuses and units described above can refer to the corresponding processes in the aforementioned method embodiments and will not be repeated here.

The above is only the specific implementation of the present disclosure, but the protection scope of the present disclosure is not limited thereto. Any technician familiar with the technical field can easily think of changes or substitutions within the technical scope disclosed in the present disclosure, which should be covered by the protection scope of the present disclosure. Therefore, the protection scope of the present disclosure should be based on the protection scope of the claims.

## Claims

1. A method for determining a terminal identity, performed by a first terminal, comprising:
determining a first terminal identity corresponding to the first terminal and/or a second terminal identity corresponding to a second terminal, the second terminal being a terminal that needs to establish an end-to-end connection with the first terminal through a relay terminal.

2. The method according to claim 1, wherein the first terminal is a terminal requesting to establish the end-to-end connection with the second terminal; or
the second terminal is a terminal requesting to establish the end-to-end connection with the first terminal.

3. The method according to claim 1, wherein the first terminal identity is associated with and corresponds to a layer 2 address of the first terminal; and
the second terminal identity is associated with and corresponds to a layer 2 address of the second terminal.

4. The method according to any one of claims 1 to 3, wherein determining the first terminal identity corresponding to the first terminal and/or the second terminal identity corresponding to the second terminal comprises:
autonomously determining, by the first terminal, the first terminal identity and/or the second terminal identity.

5. The method according to claim 4, wherein autonomously determining, by the first terminal, the first terminal identity and/or the second terminal identity comprises:
autonomously determining the first terminal identity and/or the second terminal identity before establishing the end-to-end connection with the second terminal.

6. The method according to claim 4, wherein autonomously determining, by the first terminal, the first terminal identity and/or the second terminal identity comprises:
autonomously determining the first terminal identity and/or the second terminal identity in response to establishing the end-to-end connection with the second terminal.

7. The method according to any one of claims 1 to 3, wherein determining the first terminal identity corresponding to the first terminal and/or the second terminal identity corresponding to the second terminal comprises:
receiving the first terminal identity and/or the second terminal identity sent by a first base station, wherein the first base station is a serving base station for the first terminal.

8. The method according to claim 7, wherein receiving the first terminal identity and/or the second terminal identity sent by the first base station comprises:
receiving the first terminal identity and/or the second terminal identity sent by the first base station before establishing the end-to-end connection with the second terminal.

9. The method according to claim 7, wherein receiving the first terminal identity and/or the second terminal identity sent by the first base station comprises:
receiving the first terminal identity and/or the second terminal identity sent by the first base station in response to establishing the end-to-end connection with the second terminal.

10. The method according to any one of claims 7 to 9, further comprising:
sending the layer 2 address of the first terminal and/or the layer 2 address of the second terminal to the first base station.

11. The method according to any one of claims 1 to 10, further comprising:
sending the first terminal identity and/or the second terminal identity to the relay terminal, such that the relay terminal sends the first terminal identity and/or the second terminal identity to the second terminal.

12. The method according to any one of claims 1 to 3, wherein determining the first terminal identity corresponding to the first terminal and/or the second terminal identity corresponding to the second terminal comprises:
receiving the first terminal identity and/or the second terminal identity sent by the relay terminal in response to establishing the end-to-end connection with the second terminal.

13. The method according to claim 6, 9 or 12, further comprising:
establishing the end-to-end connection with the second terminal based on the layer 2 address of the first terminal and/or the layer 2 address of the second terminal.

14. A method for determining a terminal identity, performed by a relay terminal, comprising:
determining a first terminal identity corresponding to a first terminal and/or a second terminal identity corresponding to a second terminal, the first terminal and the second terminal establishing an end-to-end connection through the relay terminal.

15. The method according to claim 14, wherein the first terminal is a terminal requesting to establish the end-to-end connection with the second terminal; or
the second terminal is a terminal requesting to establish the end-to-end connection with the first terminal.

16. The method according to claim 14, wherein the first terminal identity is associated with and corresponds to a layer 2 address of the first terminal; and
the second terminal identity is associated with and corresponds to a layer 2 address of the second terminal.

17. The method according to any one of claims 14 to 16, wherein determining the first terminal identity corresponding to the first terminal and/or the second terminal identity corresponding to the second terminal comprises:
receiving the first terminal identity and/or the second terminal identity sent by the first terminal.

18. The method according to claim 17, further comprising:
sending the first terminal identity and/or the second terminal identity to the second terminal.

19. The method according to any one of claims 14 to 16, wherein determining the first terminal identity corresponding to the first terminal and/or the second terminal identity corresponding to the second terminal comprises:
autonomously determining the first terminal identity and/or the second terminal identity in response to the first terminal establishing the end-to-end connection with the second terminal through the relay terminal.

20. The method according to any one of claims 14 to 16, wherein determining the first terminal identity corresponding to the first terminal and/or the second terminal identity corresponding to the second terminal comprises:
receiving the first terminal identity and/or the second terminal identity sent by a second base station in response to the first terminal establishing the end-to-end connection with the second terminal through the relay terminal, the second base station being a service base station for the relay terminal.

21. The method according to claim 19 or 20, further comprising:
sending the first terminal identity and/or the second terminal identity to the first terminal and the second terminal.

22. The method according to claim 19, further comprising:
establishing the end-to-end connection between the first terminal and the second terminal based on the layer 2 address of the first terminal and/or the layer 2 address of the second terminal.

23. A method for determining a terminal identity, performed by a second terminal, comprising:
receiving a first terminal identity corresponding to a first terminal and/or a second terminal identity corresponding to the second terminal sent by a relay terminal, the first terminal being a terminal that needs to establish an end-to-end connection with the second terminal through the relay terminal.

24. The method according to claim 23, wherein the first terminal is a terminal requesting to establish the end-to-end connection with the second terminal; or
the second terminal is a terminal requesting to establish the end-to-end connection with the first terminal.

25. The method of claim 23, wherein the first terminal identity is associated with and corresponds to a layer 2 address of the first terminal; and
the second terminal identity is associated with and corresponds to a layer 2 address of the second terminal.

26. The method according to any one of claims 23 to 25, wherein receiving the first terminal identity corresponding to the first terminal and/or the second terminal identity corresponding to the second terminal sent by the relay terminal comprises one of:
receiving the first terminal identity and/or the second terminal identity sent by the relay terminal before establishing the end-to-end connection with the first terminal; or
receiving the first terminal identity and/or the second terminal identity sent by the relay terminal in response to establishing the end-to-end connection with the first terminal.

27. The method according to claim 23, wherein, in a case of receiving the first terminal identity and/or the second terminal identity sent by the relay terminal in response to establishing the end-to-end connection with the first terminal, the method further comprises:
establishing the end-to-end connection with the first terminal based on the layer 2 address of the first terminal and/or the layer 2 address of the second terminal.

28. A communication apparatus, comprising:
a processing module, configured to determine a first terminal identity corresponding to a first terminal and/or a second terminal identity corresponding to a second terminal, the second terminal being a terminal that needs to establish an end-to-end connection with the first terminal through a relay terminal.

29. A communication apparatus, comprising:
a processing module, configured to determine a first terminal identity corresponding to a first terminal and/or a second terminal identity corresponding to a second terminal, the first terminal and the second terminal establishing an end-to-end connection through a relay terminal.

30. A communication apparatus, comprising:
a transceiver module, configured to receive a first terminal identity corresponding to a first terminal and/or a second terminal identity corresponding to a second terminal sent by a relay terminal, the first terminal being a terminal that needs to establish an end-to-end connection with the second terminal through the relay terminal.

31. A communication apparatus, comprising a processor and a memory, wherein a computer program is stored in the memory, and the processor executes the computer program stored in the memory so that the device performs the method according to any one of claims 1 to 13, or the processor executes the computer program stored in the memory so that the device performs the method according to any one of claims 14 to 22, or the processor executes the computer program stored in the memory so that the device performs the method according to any one of claims 23 to 27.

32. A communication apparatus, comprising a processor and an interface circuit, wherein
the interface circuit is configured to receive code instructions and transmit the code instructions to the processor; and
the processor is configured to run the code instructions to execute the method according to any one of claims 1 to 13, or to run the code instructions to execute the method according to any one of claims 14 to 22, or to run the code instructions to execute the method according to any one of claims 23 to 27.

33. A computer-readable storage medium for storing instructions, when the instructions are executed, the method according to any one of claims 1 to 13 is caused to be implemented, or when the instructions are executed, the method according to any one of claims 14 to 22 is caused to be implemented, or when the instructions are executed, the method according to any one of claims 23 to 27 is caused to be implemented.
